(19) Europäisches Patentamt
European Patent Office
Office européen des brevets

(11) Publication number: **0 101 267**
**B1**

(12) **EUROPEAN PATENT SPECIFICATION**

(45) Date of publication of patent specification: **03.12.86**

(51) Int. Cl.$^4$: **C 09 J 3/14,** C 08 F 220/00

(21) Application number: **83304534.7**

(22) Date of filing: **05.08.83**

(54) **Anaerobically curable compositions.**

(30) Priority: **06.08.82 US 405789**

(43) Date of publication of application:
**22.02.84 Bulletin 84/08**

(45) Publication of the grant of the patent:
**03.12.86 Bulletin 86/49**

(84) Designated Contracting States:
**DE FR GB IT SE**

(56) References cited:
**FR-A-2 245 749**

(73) Proprietor: **LOCTITE CORPORATION**
**705 North Mountain Road**
**Newington, Connecticut 06111 (US)**

(72) Inventor: **DeMarco, JoAnn**
**90 Westlook Road**
**Wethersfield Connecticut 06109 (US)**
Inventor: **Lien Qcheng Sun**
**284 Quarry Brook Drive**
**South Winsor Connecticut 06074 (US)**

(74) Representative: **Marchant, James Ian et al**
**Elkington and Fife High Holborn House**
**52/54 High Holborn**
**London WC1V 6SH (GB)**

**EP 0 101 267 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to anaerobically curable compositions, more particularly anaerobically curable compositions employing monomers with surfactant properties.

Porous articles, and particularly porous metal articles such as castings and sintered metal parts, frequently must be sealed and impregnated (for simplicity, hereinafter generally referred to jointly as "sealed") before use. This is necessary to make the article capable of withstanding liquid or gas pressure during use, and also to increase its density, improve its strength, reduce corrosion, and frequently to prepare the surface of the article for a subsequent painting or plating operation. A wide variety of porous metal articles are used commercially today, and are manufactured from a wide variety of metals. Zinc, copper, brass, iron, aluminium, magnesium and various alloys are among the common metals needing to be sealed. Other important materials which frequently need to be sealed are wood and ceramics.

The prior art has recognized the need to seal these articles for many years. The earliest sealing processes generally involved the use of either an inorganic sealant, such as sodium silicate, or a natural organic substance such as varnish. In more recent years, substances such as unsaturated alkyds, epoxides, and various other unsaturated monomers such as diallyl phthalate have been used. See, for example, U.S. Pat. No. 3,345,205 to Raech, issued October 3, 1967, U.S. Pat. No. 2,932,583 to Grana, issued April 12, 1960; and U.S. Pat. No. 2,554,254 to Kroft, issued May 22, 1951.

A substantially improved process for impregnating porous articles is taught by U.S. Pat. No. 3,672,942 to Neumann and Borowski, issued June 27, 1972, which relates to impregnation with polymerizable anaerobically curable monomers, followed by surface treatment of the impregnated article with an organic solvent solution of an accelerator.

U.S. Patent No. 3,969,552 to Malofsky, et al discloses such a process in which uncured anaerobic coatings are removed from the surface of articles by means of an aqueous solution of a surfactant. Typically the article is immersed in the aqueous solution of the surfactant.

U.S. Patent No. 4,069,378 to DeMarco, discloses anaerobically curable compositions which are rendered self-emulsifiable upon mixing with water by the incorporation of certain anionic and/or nonionic surfactants in a concentration range of about 0.25 to about 10.0 percent. These self-emulsifiable compositions had the advantage of being readily removed from surfaces by washing with water, making them especially useful in impregnation processes. U.S. Patent No. 4,165,400 also to DeMarco discloses the method of use of these compositions. While these methods had the advantage of cleaning off undesired uncured resin from the surfaces of articles by emulsifying in water, they had some disadvantages. The surfactants tended to behave as plasticizers in the compositions to which they were added, occasionally migrating to the surface of the cured product and resulting in negative effects upon adhesion and solvent resistance.

An object of the present invention is to overcome these disadvantages. The present invention employs in an anaerobically curing composition novel monomers which possesses surfactant properties. These monomers, hereinafter referred to as surfactant monomers, are the reaction product of a vinyl monomer and a surfactant and therefore they behave both as polymerizable materials and as surfactants. The surfactant monomers copolymerize with other comonomers of the composition thereby producing cured resins which have lipophilic and hydrophilic moieities attached thereto. In the uncured state, the composition is water-washable, e.g., self-emulsifiable in water, due to its surfactant properties. Leaching and migrating of the surfactant to the surface of the cured resin is prevented since the surfactant moieties are chemically bound within polymerized material. Solvent resistance is also surprisingly improved due to the addition of these novel surfactant monomers.

Thus the present invention provides an anaerobically curable adhesive sealant composition which is self-emulsifiable upon mixing with water and comprising at least one anaerobically curable monomer, at least one surfactant, and a free radical initiator in an amount sufficient to initiate cure of the composition in the substantial absence of oxygen but insufficient to initiate cure thereof in the presence of oxygen, characterised in that the surfactant is a surfactant monomer co-curable with the anaerobically curable monomer.

The anaerobically curable self-emulsifying compositions of the present invention may be used whenever it is desired that a polymeriziable anaerobic monomer liquid be readily removable from the surfaces of articles by means of an aqueous rinse. WHile not limited to impregnation, the invention is particularly advantageous when incorporated into an impregnation process as a means of removing excess or residual anaerobic monomer from the surface of impregnated porous articles. Thus, specifically, the present invention contemplates, in its preferred aspect, the use of the present composition as the polymerizable composition in an anaerobic impregnation process. The invention also contemplates an impregnation or sealing process at least one step of which involves removing at least a portion of the sealant from the surface of a porous article by treating the surface with plain water.

The surfactant monomers of the present invention are, however, contemplated for use in a variety of anaerobic formulations of adhesives, sealants, coatings and the like which are to be self-emulsifiable in water.

As is well known in the art of anaerobic adhesive/sealants, oxygen present in the normal atmosphere tends to prevent the curing of the liquid resins. As long as the anaerobic liquid resins are exposed to

oxygen, curing will be delayed or prevented for an extended period of time. However, under anaerobic conditions (substantially oxygen-free) the delicate balance between inhibition and initiation is upset and curing proceeds. In an impregnation process, anaerobic conditions apply within the micro pores of the porous materials, and the liquid resin cures to become a hard and tough solid thus effectively plugging the pores. This anaerobic condition is not present on the surface, thus leaving a film of uncured resin on the surface. This incured film can contaminate surroundings and interferes with the subsequent painting, plating and other assembly operations. Thus removing the uncured film at the surface is a critical factor in the successful practical application of anaerobic compositions in impregnating the porous materials.

The anaerobically curable compositions of the present invention are rendered self-emulsifiable by the incorporation of certain ethylenically unsaturated monomers containing lipophilic and hydrophilic moieties, such moieties commonly referred to as surfactants. These monomers, also known as surfactant monomers, behave as polymerizable monomers and have the added benefit of possessing surfactant properties. Thus, these monomers can be effectively employed in compositions and processes where both the sealing or impregnating of articles and the subsequent washing of excess unpolymerized material of the surface of articles is desired.

The composition of the present invention may be obtained by dissolving suitable surfactant monomers into a mixture or solution of free-radical initiators, inhibitors, and anaerobically curable monomers. A variety of non-acrylate monomers can be added to the anaerobic composition as diluents and viscosity modifiers, as is known to the art.

In an impregnation composition, the surfactant monomer, and indeed the other monomers present, should be selected to have favourable viscosity properties to permit ready penetration into the microporosity of the casting to be sealed.

In choosing a suitable surfactant monomer, compatability with the anaerobic composition is required. In practise this means that the surfactant monomer must not significantly affect the stability or polymerization process of the liquid anaerobic composition, nor the properties of the cured composition in a negative manner. Ideally, the surfactant monomer should be soluble in the anaerobic composition at room temperature. Another factor to consider in selecting a suitable surfactant monomer is the Hydrophile-Lipophile Balance (HLB). As understood in the industry, each surfactant monomer can be assigned an HLB number to characterize the hydrophilic and lipophilic moieties. To emulsify oil in water, as required by the present invention, the surfactant monomers should have an HLB ranging from 8 to 18. Aside from the above requirements, selection of a suitable surfactant monomer is a matter of routine experimentation directed by those properties which are desired.

A mixture or blend of several surfactant monomers may be employed in the anaerobic composition, providing that they are both compatable with each other and the composition as a whole.

A variety of surfactant monomers useful in anaerobic compositions are commercially available. One such surfactant monomer is prepared by the Monomer-Polymer and Dajac Laboratories, Inc., Trevase, Pennsylvania. This surfactant monomer is the reaction product of Igepal CO850, a surfactant sold by the same company, with methacrylic acid.

Other surfactant monomers employable in the present invention are anaerobically curable surfactant monomers which are the reaction product of an anaerobically curable monomer containing an isocyanate group with a surfactant containing a reactive hydrogen atom. The anaerobically curable surfactant monomers generally conform to the formula:

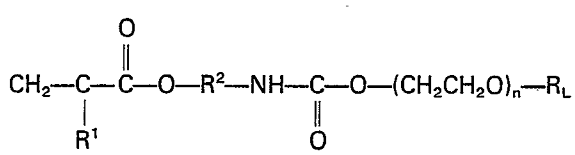

wherein $R^1$ is H or lower alkyl; $R^2$ is $C_1$—$C_6$ alkylene or

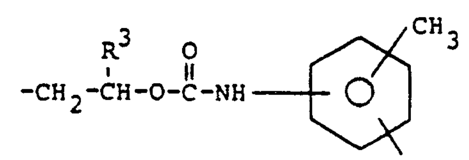 ; I

where $R^3$ is H, or lower alkyl; $R_L$ is a lipophilic group represented by long chain linear or branched alkyls, alkylphenols or polypropyleneoxides. Lower alkyl may have 1 to 6, e.g. 1 to 4 carbon atoms.

Illustrative of the preferred surfactant monomers which are themselves anaerobically curable are:

I

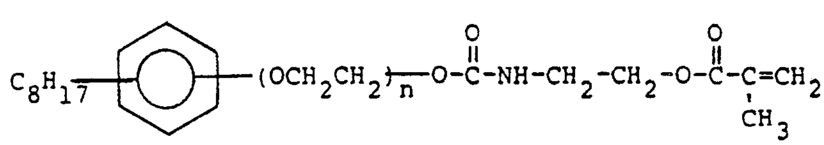

and

II

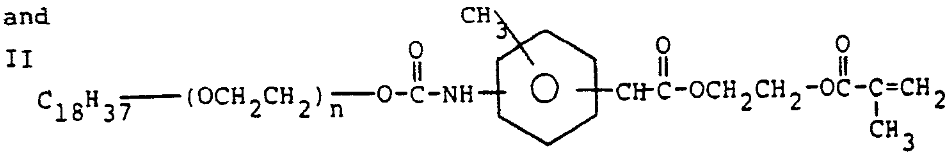

The surfactant monomers copolymerize with the other monomers of the anaerobic composition. As known in the art, anaerobic compositions may contain non-acrylate comonomers which are used to modify the viscosity, solvent resistance or other properties of the uncured or cured anaerobic composition.

The surfactant monomers typically should be present in the anaerobic composition in amounts of 1% to 80% by weight of the total composition, preferably in amounts of 5% to 20%.

A considerable number of anaerobic monomers are known. These materials characteristically contain acrylate or substituted acrylate (e.g. methacrylate) end-groups. Any such anaerobically curable composition can be rendered self-emulsifiable to at least some extent by utilizing the surfactant monomers as disclosed herein.

Preferably at least a portion of the acrylate monomer is a di- or other polyacrylate ester. These polyfunctional monomers produce cross-linked polymers, which serve as more effective and more durable sealants.

While various anaerobically curable acrylate monomers may be used, as already mentioned, preferred are polyacrylate esters which have the following general formula:

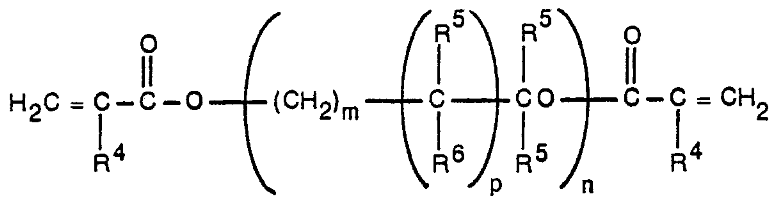

wherein $R^5$ represents hydrogen, lower alkyl of from 1 to 4 carbon atoms, hydroxy alkyl of from 1 to 4 carbon atoms, or

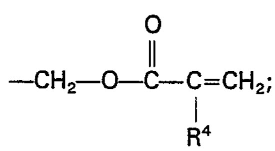

$R^4$ is hydrogen, halogen or lower alkyl or from 1 to 4 carbon atoms; $R^6$ is hydrogen, hydroxyl; or

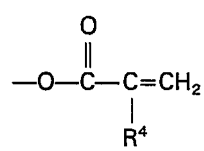

m is from 0 to 12, and preferably from 0 to 6; n is equal to at least 1, e.g., 1 to 20 or more, and preferably from 2 to 6; and p is 0 or 1.

The polymerizable polyacrylate esters corresponding to the above general formula are examplified by, but not restricted to, the following materials: di-, tri- and tetraethyleneglycol dimethacrylate, dipropyleneglycol dimethacrylate; polyethyleneglycol dimethacrylate; pentamethyleneglycol dimethacrylate; tetraethyleneglycol diacrylate; tetraethyleneglycol di(chloroacrylate); diglycerol diacrylate; diglycerol tetramethacrylate; tetramethlene dimethacrylate; ethylene dimethacrylate; and neopentylglycol diacrylate.

While polyacrylate esters, especially the polyacrylate esters described in the preceding paragraphs, have been found particularly desirable, mon-functional acrylate esters (esters containing one acrylate group) also may be used.

When dealing with monofunctional acrylate esters, it is possible to use an ester which has a relatively polar alcoholic moiety. Such materials are less volatile than low molecular weight alkyl esters and, in addition, the polar group tends to provide intermolecular attraction in the cured polymer, thus producing a more durable seal. Most preferably the polar group is a labile hydrogen, heterocyclic ring, hydroxy, amino, cyano, or halo polar group. Typical examples of compounds within this category are cyclohexylmethacrylate, tetrahydrofurfuryl methacrylate, hydroxyethyl acrylate, hydroxypropyl methacrylate, t-butylaminoethyl methacrylate, cyanoethylacrylate and chloroethyl methacrylate.

Other acrylates, such as ethoxylated bisphenol-A dimethacrylate, related compounds and their derivatives can also be used. However, when such other acrylates are used, they often are used in combination with one or more members from either or both of the above-described classes of acrylate monomers. Most preferably, polyacrylates having the chemical formula given above, comprise at least a portion, preferably at least fifty percent by weight of the acrylates used since these monomers have been found clearly superior in many anaerobic adhesive and sealant applications.

The anaerobic composition viscosity should be from 1 to 1,000 mPas (1 to 1,000 centipoises) and preferably is from 5 to 500 mPas (5 to 500 centipoises). The most highly preferred range is from 5 to 150 mPas (5 to 150 centipoises). Viscosities higher than those indicated tend to reduce the ease of emulsification; viscosities lower than those indicated are impractical to obtain because of the inherent characteristics of the monomers. It should be recognized however, that in certain adhesive and sealing situations where relatively large gaps are to be closed and relative slowness of emulsification can be tolerated, much higher viscosity sealants (e.g. 10,000—100,000 mPas (10,000—100,000 centipoises)) may be tolerable. Surface tension of the anaerobic composition also can affect these characteristics. The ideal emulsifiability for any anaerobic composition will be a function of such factors as its viscosity, surface tension, the particular surfactant monomer to be used, and the pore size of the porous part to the impregnated, and can be determined easily with a minimum of routine tests.

The monomers described above are combined with an appropriate polymerization initiator system. The initiator must be capable of inducing polymerization of the monomer or monomers in the substantial absence of oxygen, and yet not induce polymerization as long as oxygen is present. Since the unsaturated monomers used in this invention are conveniently cured through a free-radical mechanism, the most common initiator system is a redox polymerization initiator, i.e., an ingredient or a combination of ingredients which produce an oxidation-reduction reaction, resulting in the production of free radicals. The most common initiator systems of this type are those involving peroxy materials which, under the appropriate conditions, decompose to form peroxy free radicals. Initiators are generally present in amounts of 0.1 to 10% by weight of the composition, and preferably from 0.2 to 5%.

A class of peroxy initiators which has been found readily adaptable to the anaerobic concept, and particularly efficient when used in combination with the acrylate monomers described above, are the hydroperoxy initiators. Of this class, the organic hydroperoxides are the most preferred. Cumene hydroperoxide has been used with particular success. Inorganic peroxides and compounds such as peresters which decompose to form free radicals are also useful. Thus, as used herein, the term "peroxy" is intended to mean peroxides, hydroperoxides and peresters which are suitable for preparing anaerobically curing monomer systems.

For purposes of versatility, it is frequently desirable to incorporate in the composition various additives, for example, various classes of accelerators of hydroperoxide decomposition. Typical examples are tertiary amines such as tributyl amine, sulfimides such as benzoic sulfimide, formamide and compounds containing oxidizable transition metals, such as copper octanoate; as well as hydrazine compounds such as acetyl phenyl hydrazine. Accelerators are generally used with good results in concentrations of less than 10% by weight of the total composition, the preferred range being 0.1% to 0.75%.

The invention also contemplates a process of impregnation, wherein the sealant composition described above cures under the anaerobic conditions of the porous interior of the article to form a hard, durable resin. However, at the surface of the article there is sufficient contact with oxygen to leave thin films of the impregnant in the uncured, or more likely, partially uncured state. This film is undesirable since the uncured impregnant can contaminate its surroundings upon removal by normal abrasion or by various liquids. More importantly, this film tends to interfere with the subsequent painting, plating or assembly operations which frequently are performed upon the metal articles, and generally will be removed during the painting or plating operations and will contaminate any painting or plating baths which are used.

The present invention employs surfactant monomers in porous metal sealant compositions. On the surface of the porous article, where exposure to oxygen prevents cure of the composition, the surfactant monomers exhibit surfactant properties, making excess resin, which is normally water insoluble, self-emulsifiable, e.g., readily washed off with water. Inside the pores of the article, where anaerobic conditions are reached, the surfactant monomers behave as anaerobically curable monomers, copolymerizing with the other monomers present to become an integral part of the polymerized sealant, thereby preventing the possibility of migration of the surfactant to the surface of the cured sealant.

A particular advantage of these self-emulsifiable compositions is that their benefits may be realized through room temperature treatment with water. Warm or even hot water, however, may be used if desired. In addition, an aqueous surfactant wash may be optionally used instead of plain water, although this is ordinarily not necessary.

Washing of articles having the self-emulsifying compositions on their surface may be performed by any convenient method. For example, the articles may be placed on racks and sprayed with water. The most desirable method of treatment is by dipping the articles into a tank containing the wash water. Preferably, the tank will be moderately agitated, although it is an advantage of this invention that extreme agitation is not required. Length of the treatment need only be such as will provide adequate removal of the anaerobic monomer composition and may be readily determined by simple experimentation for various

combinations of surfactant monomer, monomer, concentration and agitation. In the great majority of cases the treatment time will be less than 10, typically less than 5 minutes.

In particular, this invention is useful in the process for sealing porous rigid articles which comprises:
A. impregnating the article with a self-emulsifiable anaerobically curable composition which comprises:
(a) at least one ethylenically unsaturated monomer containing lipophilic and hydrophilic moieties;
(b) at least one anaerobically curable monomer; and
(c) a peroxy initiator in sufficient concentration to initiate cure of the monomer in (a) and (b) in the substantial absence of oxygen;
B. washing the surface of the article with water; and
C. permitting the anaerobically curable sealant to cure.

The impregnation process uses tanks which contain the anaerobic composition. The composition is aerated at a sufficient rate to prevent its premature polymerization. Porous rigid articles to be sealed are submerged in the tank aeration is discontinued and a vacuum of less than 0.175 kg/cm$^2$ (5 inches of mercury) absolute pressure is drawn in the tank. After the interstices of the article have been evacuated, the vacuum is released to force the anaerobically curable composition into the interstices. The impregnated article is then removed from the composition and treated with an aqueous rinse. The surface can optionally be further treated with an aqueous or solvent solution of a surface activator. The surface activator may be included in the aqueous rinse, or may be a separate step. The surface activator, if present, may be used in an amount of 0.1% to 5% by weight of the solution, and may be selected from the following classes: amine-aldehyde condensation products; sulfur-containing free-radical accelerators; aromatic tertiary amines; organic compounds containing an oxidizable transition metal; and other suitable reducing agents. The anaerobic composition is then permitted to cure.

The invention can be further understood by the following examples, which are not intended to limit the invention in any way.

## Example 1

This example is intended to demonstrate the emulsifiability of the composition of the invention as compared with compositions of the prior art. Formulations were prepared, as shown in Table 1, and an oil-soluble, water insoluble blue fluorescent dye was added to aid in the observation for emulsifiability. Testing was performed under a black light to render the compositions clearly visible as bright blue fluorescent liquids. 6.45 Square centimetres (one square inch) of a 10.16 × 2.54 cm (4 × 1 inch) steel lap shear was dip coated in each of the formulations in Table 1 and any excess was allowed to run off. The coated lap shears were dipped in 300 ml of unstirred, room temperature tap water. Each dip consisted of immersion to a level above the composition coating, so that the entire coating was in water. Each coated lap shear was dipped 20 times, the approximate fractional area of the coating remaining on the lap shear being recorded after the tenth and twentieth dips. The results are shown in Table 2.

TABLE 1

%wt. based on the total composition

| Ingredient | A | B | C | D |
|---|---|---|---|---|
| triethylene glycol-dimethacrylate | 70 | 68 | 68 | 67 |
| lauryl methacrylate | 26 | 26 | 26 | 24 |
| cumene hydroperoxide | 2 | 2 | 2 | 2 |
| inhibitors and accelerators | 2 | 2 | 2 | 2 |
| surfactant* | — | 2 | — | — |
| SM-2 | — | — | 2 | 5 |

*ethoxylated lauryl alcohol

All ingredients for the above compositions were added in the sequence that they appear and mixed for 30 minutes at room temperature.

Composition A is a standard anaerobically curable composition used for impregnating and sealing articles. It does not contain a surfactant or surfactant monomer. Composition B is identical to A except that a small amount of surfactant has been added to the formulation to aid emulsification in water. This composition is of the type disclosed in U.S Patent Nos. 4,069,378 and 4,165,400 to DeMarco.

Compositions C and D are representative of the instant invention.

The surfactant monomers of the present invention are designated by an SM number. Some of the surfactant monomers tested were prepared by reacting isocyanatoethyl methacrylate with the commercially available surfactants indicated below.

| Surfactant Monomer | Reaction product of isocyanatoethyl methacrylate and the following surfactant: |
|---|---|
| SM-1 | ethoxylated $C_{16-18}$ linear alkanol with 30 ethylene oxide units, sold under the trade name Siponic E-15 by Alcolac Corporation, Maryland, U.S.A. |
| SM-2 | ethoxylated nonylphenol with 20 ethylene oxide units, sold under the trade name Igepal CO-850 by GAF Corporation, New York, New York, USA. |
| SM-3 | block copolymer of polyoxyethylene and polyoxypropylene, sold by BASF Corporation in Wyandotte, Michigan, USA under the trade name Pluronic L-72. |
| SM-4 | ethoxylated dialkylacetylenic glycol with 30 ethoxylene oxide units sold under the trade name Surfynol 485. |
| SM-5 | ethoxylated $C_{16-18}$ linear alkanol with 15 ethylene oxide units sold under the trade name Siponic E-7 by Alcolac Corporation, Maryland, USA. |

TABLE 2

% of coating remaining on lap shear after:

| Composition | 10 dips | 20 dips |
|---|---|---|
| A | 90% | 90% |
| B | 30% | trace% |
| C | 30% | trace% |
| D | 30% | trace% |

As shown in Table 2, above, compositions of the present invention (C and D) exhibit excellent emulsifiability in water, as evidenced by a low percentage of coating remaining on the lap shear after dipping in the unagitated water.

Example 2

TABLE 3

| | Compositions % by weight | | | | | | |
|---|---|---|---|---|---|---|---|
| Ingredient | F | G | H | I | J | K | L |
| triethylene glycol dimethacrylate | 66 | 63 | 56 | 63 | 63 | 63 | 56 |
| lauryl methacrylate | 25 | 23 | 20 | 23 | 23 | 23 | 20 |
| cumene hydroperoxide | 2 | 2 | 2 | 2 | 2 | 2 | 2 |
| inhibitors and accelerators | 1 | 1 | 1 | 1 | 1 | 1 | 1 |
| blue fluorescent dye solution | 1 | 1 | 1 | 1 | 1 | 1 | 1 |
| Sm-1 | 5 | 10 | 20 | — | — | — | — |
| SM-2 | — | — | — | 10 | 10 | — | — |
| SM-3 | — | — | — | — | — | 10 | — |
| SM-4 | — | — | — | — | — | — | 20 |

Emulsifiability tests were run on the compositions in Table 3. These emulsifiability tests were conducted by adding 1 ml of the respective composition into 50 ml of water in a glass bottle. The bottle was capped and shaken for approximately 5 to 10 seconds. Suitable stable emulsions were formed from each of the compositions.

Example 3

This example is designed to show the improved solvent resistance the compositions of the present invention have over those of the prior art. The compositions of Example 2 were used where indicated but without the use of blue dye. The compositions of the prior art were identical to Compositions F without the blue dye except that a free surfactant was added in place of the surfactant monomer.

The compositions were cured at 82°C, and cut into samples of 10 mm × 25 mm. Three samples from each composition were measured for their total weight, placed into 30 ml of solvent in a beaker and left at room temperature for four weeks. After the four week immersion, the samples were removed, the surface moisture wiped off, and weighed immediately. The weight difference before and after the exposure is used to calculate the percentage weight gained. The amount of weight gained is an indication of resistance to the solvent. The less weight gained by the sample during the immersion period, the more solvent resistant the cured composition.

A variety of solvents were tested on numerous prior art compositions as well as those compositions of the present invention. The results are tabulated in Table 4.

TABLE 4

Solvent Resistance — % weight gained after 4 weeks immersion

| Solvent | Surfactant | Surfactant Monomer | 5% Surfactant | 5% Surfactant Monomer | 10% Surfactant | 10% Surfactant Monomer | 20% Surfactant | 20% Surfactant Monomer |
|---|---|---|---|---|---|---|---|---|
| $H_2O$ | Igepal CO-850 | SM-2 | 20.0% | 1.7% | 2.8% | 2.2% | 10.6% | 3.9% |
| $H_2O$ | Pluronic L-72 | SM-3 | 1.8% | 1.4% | 3.1% | 1.7% | 4.3% | 1.3% |
| $H_2O$ | Siponic E-7 | SM-5 | 1.7% | 1.5% | 2.7% | 2.2% | 11.5% | 4.8% |
| Glycol and $H_2O$ | Igepal CO-850 | SM-2 | 1.1% | 1.1% | 1.3% | 1.3% | 4.1% | 1.7% |
| Glycol and $H_2O$ | Siponic E-7 | SM-5 | 0.5% | 0.6% | 1.1% | 1.3% | 7.0% | 2.2% |
| Unleaded Gasoline | Igepal CO-850 | SM-2 | 6.3% | 4.4% | 9.3% | 4.7% | 13.1% | 10.1% |
| Brake Fluid | Igepal CO-850 | SM-2 | 2.4% | 1.5% | 4.3% | 2.6% | 8.7% | 5.0% |
| Brake Fluid | Pluronic L-72 | SM-3 | 2.9% | 2.4% | 5.6% | 3.2% | 10.7% | 8.2% |
| Brake Fluid | Siponic E-7 | SM-5 | 4.7% | 2.0% | 3.2% | 2.3% | 11.7% | 10.8% |
| Hydraulic Fluid | Igepal CO-850 | SM-2 | 0.2% | 0.2% | 0.4% | 0.2% | 1.1% | 0.6% |
| Hydraulic Fluid | Pluronic L-72 | SM-3 | 0.4% | 0.0% | 0.4% | 0.0% | 5.6% | 0.7% |
| Hydraulic Fluid | Siponic E-7 | SM-5 | 0.0% | −0.2% | −0.4% | 0.0% | 2.0% | 0.7% |
| $H_2O$ | Igepal CO-850 | SM-6* | | | | 2.6% | 10.3% | 1.8% |
| Glycol and $H_2O$ | Igepal CO-850 | SM-6 | | | | 1.3% | 2.8% | 1.3% |

TABLE 4 (continued)

Solvent Resistance — % weight gained after 4 weeks immersion

| Solvent | Surfactant | Surfactant Monomer | 10% Surfactant Monomer | 20% Surfactant | 20% Surfactant Monomer |
|---|---|---|---|---|---|
| Unleaded Gasoline | Igepal CO-850 | SM-6 | 6.3% | 13.5% | 5.6 |
| Brake Fluid | Igepal CO-850 | SM-6 | 2.8% | 7.8% | 3.5 |
| Hydraulic Fluid | Igepal CO-850 | SM-6 | 0.0% | 0.9% | 0.0% |

*SM-6 is a surfactant monomer prepared from the reaction of Igepal CO-850 with methacrylic acid, sold by the Monomer-Polymer and Dajac Laboratories, Incorporated, Trevose, Pennsylvania, USA.

**Claims**

1. An anaerobically curable adhesive sealant composition which is self-emulsifiable upon mixing with water and comprising at least one anaerobically curable monomer, at least one surfactant and a free radical initiator in an amount sufficient to initiate cure of the composition in the substantial absence of oxygen but insufficient to initiate cure thereof in the presence of oxygen characterised in that the surfactant is a surfactant monomer co-curable with the anaerobically curable monomer.

2. A composition as claimed in Claim 1, characterised in that the surfactant monomer is itself anaerobically curable.

3. A composition as claimed in Claim 1 or 2, characterised in that the surfactant monomer comprises the reaction product of a surfactant containing an active hydrogen atom with a vinyl monomer containing an isocyanate group.

4. A composition as claimed in Claim 3, characterised in that the isocyanate-containing monomer is isocyanatoethyl methacrylate.

5. A composition as claimed in Claim 1 or 2, characterised in that the surfactant monomer has the general formula:

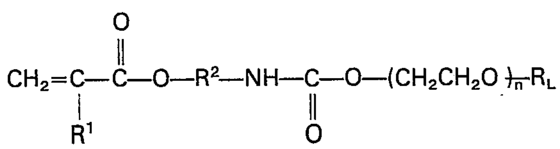

wherein $R^1$ is H or lower alkyl; $R^2$ is $C_{1-6}$ alkylene or

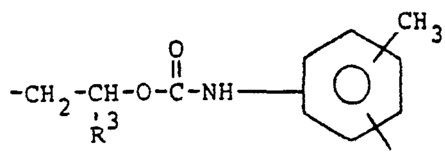 ;

$R^3$ is H or lower alkyl; $R_L$ is a lipophilic group selected from alkyls, alkylphenols or polypropylene oxides.

6. A composition as claimed in claim 1 or 2, characterised in that the surfactant monomer is a methacrylate ester of a polyethoxylated nonylphenol.

7. A composition as claimed in any of Claims 1 to 6, characterised in that the surfactant monomer has an HLB number from 8 to 18.

8. A composition as claimed in any of Claims 1 to 7, characterised in that the anaerobically curable monomer, has the formula:

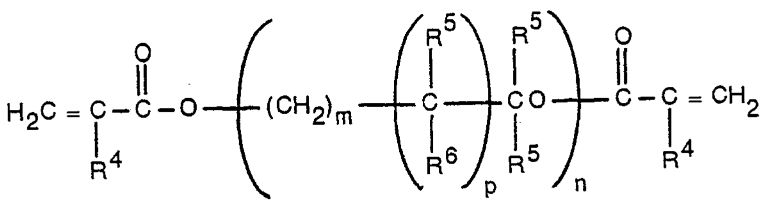

wherein $R^5$ represents hydrogen, lower alkyl of from 1 to 4 carbon atoms, hydroxy alkyl of from 1 to 4 carbon atoms, or

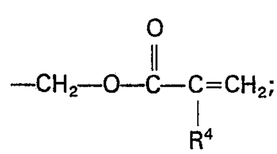

$R^4$ is hydrogen, halogen or lower alkyl of from 1 to 4 carbon atoms; $R^6$ is hydrogen, hydroxyl, or

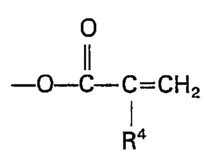

m is 0 to 12; n is equal to at least 1; and p is 0 or 1.

9. A composition as claimed in any of Claims 1 to 8, characterised in that the composition additionally contains an accelerator of anaerobic polymerization.

10. A composition as claimed in Claim 9, characterised in that the accelerator is a sulfimide or a hydrazine derivative.

11. A process for impregnating and sealing a porous article comprising the steps of:

(a) impregnating the article with a self-emulsifying anaerobically curable composition;

(b) washing the surface of the article with water; and

(c) permitting the composition to cure,

characterised in that the self-emulsifying anaerobically curable composition is a composition as claimed in any of claims 1 to 10.

12. A process as claimed in Claim 11 characterised in that the article surface is treated with a surface activator selected from amine-aldehyde condensation products, aromatic tertiary amines, sulfur containing free radical accelerators and organic transition metal compounds.

**Patentansprüche**

1. Anaerob vernetzbare, klebende Versiegelungszusammensetzung, welche bei der Mischung mit Wasser selbst-emulgierend ist und wenigstens ein anaerob vernetzbares Monomer, wenigstens ein oberflächenaktives Mittel und einen Freie-Radikale-Initiator in einer Menge enthält, die ausreicht, die Härtung der Zusammensetzung im wesentlichen in Abwesenheit von Sauerstoff einzuleiten, jedoch nicht ausreicht, ihre Härtung in Gegenwart von Sauerstoff einzuleiten, dadurch gekennzeichnet, dass das oberflächenaktive Mittel ein mit dem anaerob vernetzbaren Monomer co-vernetzbares oberflächenaktives Monomer ist.

2. Zusammensetzung nach Anspruch 1, dadurch gekennzeichnet, dass das oberflächenaktive Monomer selbst anaerob vernetzbar ist.

3. Zusammensetzung nach Anspruch 1 oder 2, dadurch gekennzeichnet, dass das oberflächenaktive Monomer das Reaktionsprodukt eines ein aktives Wasserstoffatom enthaltenden oberflächenaktiven Mittels mit einem eine Isocyanatgruppe enthaltenden Vinylmonomer ist.

4. Zusammensetzung nach Anspruch 3, dadurch gekennzeichnet, dass das Isocyanat-enthaltende Monomer Isocyanatoethylmethacrylat ist.

5. Zusammensetzung nach Anspruch 1 oder 2, dadurch gekennzeichnet, dass das oberflächenaktive Monomer die allgemeine Formel aufweist.

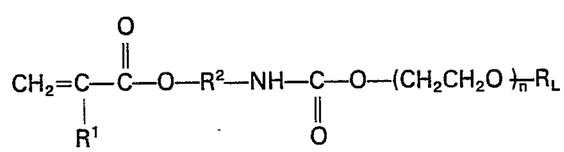

worin $R^1$ H oder Niederalkyl ist; $R^2$ $C_{1-6}$-Alkylen oder

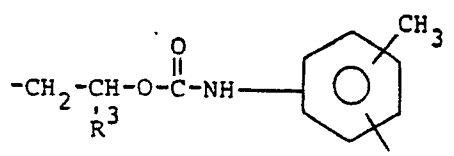 ;

ist; $R^3$ H oder Niederalkylist; $R_L$ eine aus Alkylen, Alkylphenolen oder Polypropylenoxiden ausgewählte lipophile Gruppe ist.

6. Zusammensetzung nach Anspruch 1 oder 2, dadurch gekennzeichnet, dass das oberflächenaktive Monomer ein Methacrylatester eines polyethoxylierten Nonylphenols ist.

7. Zusammensetzung nach einem der Ansprüche 1 bis 6, dadurch gekennzeichnet, dass das oberflächenaktive Monomer eine HLB-Nummer von 8 bis 18 aufweist.

8. Zusammensetzung nach einem der Ansprüche 1 bis 7, dadurch gekennzeichnet, dass das anaerob vernetzbare Monomer die Formel aufweist:

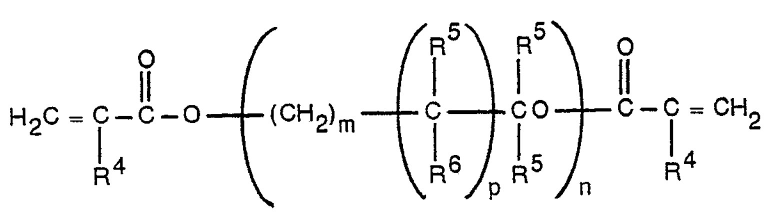

worin $R^5$ Wasserstoff, Niederalkyl mit 1 bis 4 Kohlenstoffatomen, Hydroxyalkyl mit 1 bis 4 Kohlenstoffatomen oder

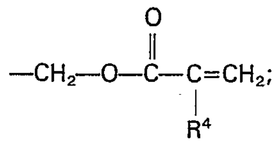

darstellt, $R^4$ Wasserstoff, Halogen oder Niederalkyl mit 1 bis 4 Kohlenstoffatomen ist; $R^6$ Wasserstoff, Hydroxyl oder

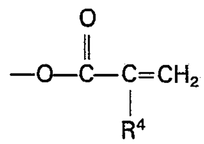

ist; m 0 bis 12 ist; n wenigstens 1 ist; und p 0 oder 1 ist.

9. Zusammensetzung nach einem der Ansprüche 1 bis 8, dadurch gekennzeichnet, dass die Zusammensetzung zusätzlich einen Beschleuniger für die anaerobe Polymerisation enthält.

10. Zusammensetzung nach Anspruch 9, dadurch gekennzeichnet, dass der Beschleuniger ein Sulfimid- oder Hydrazinderivat ist.

11. Verfahren zur Imprägnierung und Versiegelung eines porösen Gegenstands, welches die Schritte umfasst:

(a) Imprägnieren des Gegenstands mit einer selbst-emulgierenden, anaerob vernetzbaren Zusammensetzung;

(b) Waschen der Oberfläche des Gegenstands mit Wasser; und

(c) Vernetzenlassen der Zusammensetzung,

dadurch gekennzeichnet, dass die selbst-emulgierende, anaerob vernetzbare Zusammensetzung eine Zusammensetzung nach einem der Ansprüche 1 bis 10 ist.

12. Verfahren nach Anspruch 11, dadurch gekennzeichnet, dass die Gegenstandoberfläche mit einem aus Amin-Aldehyd-Kondensationsprodukten, aromatischen tertiären Aminen, schwefelhaltigen Frie-Radikale-Beschleunigern und organischen Übergangsmetallverbindungen ausgewählten Oberflächenaktivator behandelt wird.

**Revendications**

1. Une composition d'étanchéité, adhésive, durcissable en conditions anaérobies qui est auto-émulsionnable par mélange à l'eau et comprenant au moins un monomère durcissable en conditions anaérobies, au moins un surfactif et un initiateur de radicaux libres en une quantité suffisante pour amorcer le durcissement de la composition en l'absence quasi-totale d'oxygène, mais insuffisante pour amorcer son durcissement en présence d'oxygène, caracterisée en ce que le surfactif est un monomère surfactif durcissable avec le monomère durcisssable en conditions anaérobies.

2. Une composition telle que revendiquée dans la revendication 1, caractérisée en ce que le monomère surfactif est lui-même durcissable en conditions anaérobies.

3. Une composition telle que revendiquée dans la revendication 1 ou 2, caractérisée en ce que le monomère surfactif comprend le produit réactionnel d'un surfactif contenant un atome d'hydrogène actif avec un monomère vinylique contenant un groupe isocyanate.

4. Une composition telle que revendiquée dans la revendication 3, caractérisée en ce que le monomère contenant de l'isocyanate est le méthacrylate d'isocyanatoéthyle.

5. Une composition telle que revendiquée dans la revendication 1 ou 2, caractérisée en ce que le monomère surfactif a la formule générale:

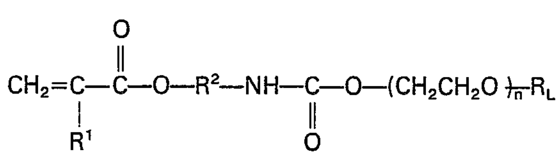

dans laquelle $R^1$ est H ou un groupe alkyle inférieur; $R^2$ est un groupe alkylène en $C_1$—$C_6$ ou

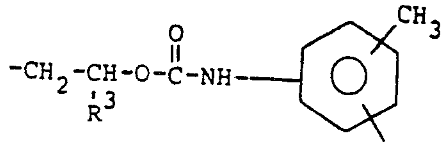

;

$R^3$ est H ou un groupe alkyle inférieur, $R_L$ est un groupe lipophile choisi entre des groupes alkyle, des alkylphénols ou des oxydes de polypropylène.

6. Une composition telle que revendiquée dans la revendication 1 ou 2, caractérisée en ce que le monomère surfactif est un ester méthacrylique d'un nonylphénol polyéthoxylé.

7. Une composition telle que revendiquée dans l'une quelconque des revendications 1 à 6, caractérisée en ce que le monomère surfactif a un rapport hydro-lipophile de 8 à 18.

8. Une composition telle que revendiquée dans l'une quelconque des revendications 1 à 7, caractérisée en ce que le monomère durcissable en conditions anaérobies a la formule:

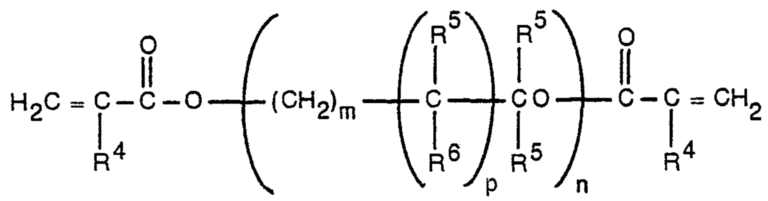

dans laquelle $R^5$ représente l'hydrogène, un groupe alkyle inférieur de 1 à 4 atomes de carbone, un groupe hydroxyalkyle de 1 à 4 atomes de carbone, ou

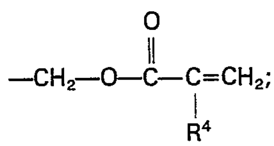

dans laquelle $R^4$ est l'hydrogène, un halogène ou un groupe alkyle inférieur de 1 à 4 atomes, de carbone; $R^6$ est l'hydrogène, un groupe hydroxyle, ou

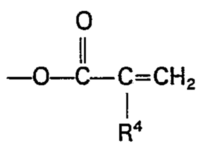

m est égal à 0—12; n est égal à au moins 1, et p est égal à 0 ou 1.

9. Une composition telle que revendiquée dans l'une quelconque des revendications 1 à 8, caractérisée en ce que la composition contient de plus un accélérateur de polymérisation anaérobie.

10. Une composition telle que revendiquée dans la revendication 9, caractérisée en ce que l'accélérateur est un sulfimide ou un dérivé d'hydrazine.

11. Un procédé pour imprégner et étanchéifier un article poreux comprenant les étapes consistant à:

a) imprégner l'article avec une composition auto-émulsionnante, durcissable en conditions anaérobies;

b) laver la surface de l'article à l'eau, et

c) laisser durcir la composition,

caractérisé en ce que la composition auto-émulsionnante, durcissable en conditions anaérobies est une composition telle que revendiquée dans l'une quelconque des revendications 1 à 10.

12. Un procédé tel que revendiqué dans la revendication 11, caractérisé en ce que la surface de l'article est traitée par un activateur de surface choisi entre des produits de condensation amine-aldéhyde, des amines tertiaires aromatiques, des accélérateurs radicalaires libres sulfurés et des composés organiques de métaux de transition.